# EUROPEAN PATENT APPLICATION

(11) **EP 4 481 522 A1**
(43) Date of publication of application: **25.12.2024**
(21) Application number: 24183453.0
(22) Date of filing: 20.06.2024
(51) Int. Cl.: G05B 23/02

(54) **MONITORING HEALTH OF AN AIRCRAFT ENGINE USING REPLACEABLE CIRCUIT COMPONENT**

(30) Priority: 20.06.2023 US 202318211977
(71) Applicant: PRATT & WHITNEY CANADA CORP., Longueuil, Québec J4G 1A1 (CA)
(72) Inventor: MANSOUR, Tarek, (01BE5) Longueuil, J4G 1A1 (CA); EYRE, Alexander, (01BE5) Longueuil, J4G 1A1 (CA); SMITH, Michael P., (01BE5) Longueuil, J4G 1A1 (CA)
(74) Representative: Dehns

(57) **Abstract**

A method of operation is provided. During this operating method, a parameter of an engine (12) of an aircraft is determined. The parameter is compared to a threshold using a monitoring unit controller (36) onboard the aircraft. The threshold is established by an electrical resistance of a circuit component (34) onboard the aircraft which is external to the monitoring unit controller (36). An action is initiated using the monitoring unit controller (36) where the parameter is greater than or equal to the threshold.

## Description

### TECHNICAL FIELD

This disclosure relates generally to an aircraft and, more particularly, to monitoring health of an aircraft engine.

### BACKGROUND INFORMATION

An aircraft may include a system for monitoring health of an aircraft engine. Various types and configurations of engine health monitoring systems are known in the art. While these known engine health monitoring systems have various benefits, there is still room in the art for improvement.

### SUMMARY

According to an aspect of the present disclosure, a method of operation (a method of operating an aircraft system) is provided. During this operating method, a parameter of an aircraft engine of an aircraft is determined (e.g. using a sensor). The parameter is compared to a threshold using a monitoring unit controller onboard the aircraft. The threshold is established by an electrical resistance of a circuit component onboard the aircraft which is external to the monitoring unit controller. An action is initiated using the monitoring unit controller where the parameter is greater than or equal to the threshold.

According to another aspect of the present disclosure, another method of operation (a method of operating an aircraft system) is provided. During this operating method, a monitoring unit is provided for an aircraft engine of an aircraft. The monitoring unit is onboard the aircraft. The monitoring unit includes a sensor, a circuit component and a controller in signal communication with the sensor and the circuit component. A parameter of the aircraft engine is determined using the sensor. The parameter is compared to a threshold using the controller. The threshold is established by the circuit component. The threshold is changed between flights of the aircraft.

According to still another aspect of the present disclosure, an aircraft system is provided that includes an aircraft engine and a monitoring unit. The monitoring unit includes a sensor, a circuit component and a controller. The circuit component is external to the controller. The controller is in signal communication with the sensor and the circuit component. The monitoring unit is configured to: measure a parameter of the aircraft engine using the sensor; establish a threshold using an electrical resistance of the circuit component; compare the parameter to the threshold using the controller; and initiate an action where the parameter is greater than or equal to the threshold.

The threshold may be established by an electrical resistance of the circuit component.

The threshold may be changed to a second threshold by replacing the circuit component with a second circuit component between the flights of the aircraft. The second circuit component may establish the second threshold.

The method may also include initiating an action using the controller where the parameter is greater than or equal to the threshold.

The circuit component may be discrete from the monitoring unit controller.

The circuit component may be configured as or otherwise include an electronic configuration plug electrically coupled to the monitoring unit controller.

The circuit component may be configured as or otherwise include a wire harness electrically coupled to the monitoring unit controller.

The method may also include changing the threshold by replacing the circuit component with a second circuit component. An electrical resistance of the second circuit component may be different than the electrical resistance of the circuit component.

The changing of the threshold may include increasing the threshold.

The changing of the threshold may include decreasing the threshold.

The action may be initiated during an aircraft flight. The threshold may be changed following the aircraft flight during maintenance of the aircraft.

The circuit component may be replaced with the second circuit component without disassembling the monitoring unit controller.

The circuit component may be replaced with the second circuit component without removing the monitoring unit controller from the aircraft.

The parameter may be or otherwise be indicative of vibrations.

The action may be or otherwise include a notification to an operator of the aircraft engine and/or maintenance personnel.

The method may also include: measuring a second parameter of the aircraft engine using a sensor; and communicating a signal from the sensor to an engine controller for the aircraft engine. The signal may be indicative of the second parameter. The action may be or otherwise include altering the signal between the sensor and the engine controller using the monitoring unit controller to trigger a response by the engine controller.

The response may be or otherwise include initiating a notification to an operator of the aircraft engine and/or maintenance personnel.

The response may be or otherwise include altering operation of the aircraft engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for an aircraft.
FIG. 2 is a schematic illustration of an electronic configuration plug received within a receptacle of a monitoring unit controller.
FIG. 3 is a schematic illustration of a wiring harness in signal communication with the monitoring unit controller.
FIG. 4 is a schematic illustration of another system for the aircraft.
FIG. 5 is a flow diagram of a method of operation for an aircraft engine.

### DETAILED DESCRIPTION

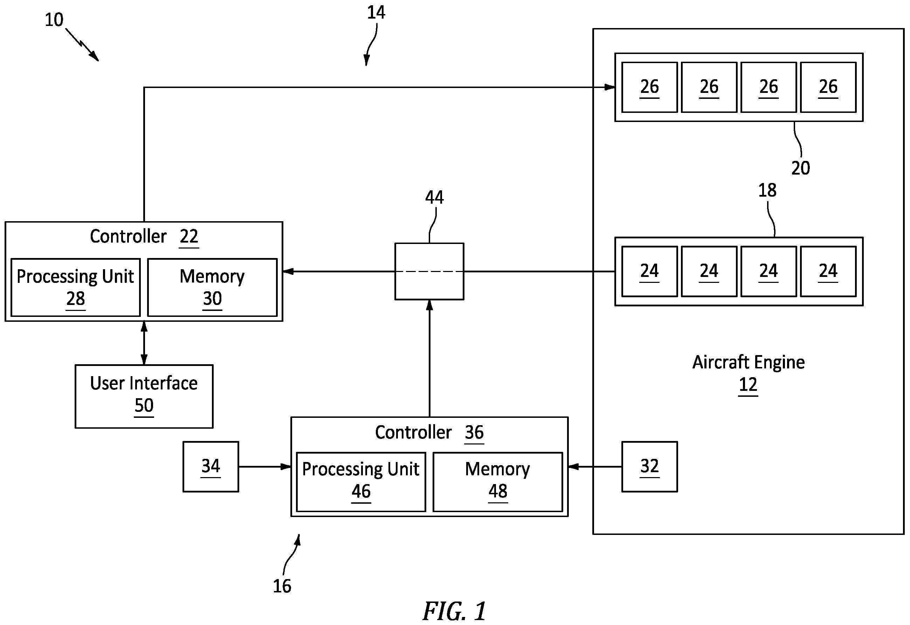

FIG. 1 illustrates a system 10 for an aircraft. The aircraft may be an airplane, a helicopter, a drone (e.g., an unmanned aerial vehicle (UAV)) or any other manned or unmanned aerial vehicle or system. The aircraft system 10 of FIG. 1 includes an aircraft engine 12, an engine control system 14 and an engine parameter monitoring unit 16.

The aircraft engine 12 may be an internal combustion (IC) engine. Examples of the internal combustion engine include, but are not limited to, a gas turbine engine, a rotary engine (e.g., a Wankel engine), a reciprocating piston engine, a rotary combustion engine and a pulse detonation engine. This aircraft engine 12 may be configured as, or otherwise included as part of, a powerplant for a propulsion system of the aircraft. Examples of the aircraft propulsion system include, but are not limited to, a turbofan propulsion system, a turbojet propulsion system, a turboprop propulsion system, a propfan propulsion system, a pusher fan propulsion system and a rotorcraft propulsion system. The aircraft engine 12 may also or alternatively be configured as, or otherwise included as part of, a powerplant for an electric power system of the aircraft. An example of the aircraft electric power system is an auxiliary power unit (APU) for the aircraft. The present disclosure, however, is not limited to the foregoing exemplary aircraft engine types nor the foregoing exemplary engine applications.

The engine control system 14 is configured to control and monitor operation of the aircraft engine 12. The engine control system 14 of FIG. 1, for example, includes a sensor system 18 and an actuation system 20. This engine control system 14 also includes an onboard engine controller 22.

The sensor system 18 is configured to measure or otherwise determine one or more operational parameters of and/or for the aircraft engine 12. Examples of the operational parameters include, but are not limited to:
▪ Gas (e.g., air and/or combustion products) pressure and/or temperature within and/or outside of the aircraft engine 12;
▪ Fuel pressure, temperature and/or flowrate to and/or within the aircraft engine 12;
▪ Lubricant pressure, temperature, flowrate and/or level within the aircraft engine 12;
▪ Coolant pressure, temperature, flowrate and/or level within the aircraft engine 12;
▪ Actuation (e.g., hydraulic) fluid pressure, temperature, flowrate and/or level within the aircraft engine 12;
▪ Rotational speed of one or more components (e.g., shafts, bladed rotors, rotating assemblies, spools, etc.) within the aircraft engine 12; and/or
▪ Rotational speed of a load (e.g., propulsor rotor, generator rotor, etc.) operatively coupled to and rotatably driven by the aircraft engine 12.

The sensor system 18 of FIG. 1 includes one or more operational parameter sensors 24 arranged with (e.g., mounted to, positioned within, positioned along, etc.) the aircraft engine 12. Examples of these operational parameter sensors 24 include, but are not limited to, pressure sensors, temperature sensors, flow sensors, fluid level sensors and/or speed sensors.

The actuation system 20 includes one or more actuators 26 which affect operational control of the aircraft engine 12. Examples of the actuators 26 include, but are not limited to, valves, pumps, electric motors, fluid motors, hydraulic pistons, and the like.

The engine controller 22 is in signal communication with (e.g., hardwired and/or wirelessly coupled to) the sensor system 18 and its operational parameter sensors 24. The engine controller 22 is also in signal communication with the actuation system 20 and its actuators 26. The engine controller 22 may be an electronic engine controller (EEC), an electronic control unit (ECU), a full-authority digital engine controller (FADEC), etc. for the aircraft engine 12 and, more generally, the aircraft propulsion system / the aircraft electric power system. The engine controller 22 is configured to control operation of the aircraft engine 12 using the sensor system 18 and the actuation system 20. The engine controller 22, for example, may generate one or more control signals based on one or more commands from personnel operating the aircraft (e.g., a pilot) and/or a sensor signal (or sensor signals) from the sensor system 18; e.g., sensor feedback. The engine controller 22 may then provide the control signal(s) to the actuation system 20 and its actuators 26 to affect engine control.

The engine controller 22 may be implemented with a combination of hardware and software. The hardware may include at least one processing unit 28 and a memory 30, which processing unit 28 may include one or more single-core and/or multi-core processors. The hardware may also or alternatively include analog and/or digital circuitry other than that described above. The memory 30 is configured to store software (e.g., program instructions) for execution by the processing device, which software execution may control and/or facilitate performance of one or more operations such as those described in the methods below. The memory 30 may be a non-transitory computer readable medium. For example, the memory 30 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The monitoring unit 16 is configured to monitor at least one health parameter of the aircraft engine 12. The monitoring unit 16 of FIG. 1, for example, includes at least one monitoring unit (MU) sensor 32, a monitoring unit (MU) circuit component 34 and a monitoring unit (MU) controller 36.

The MU sensor 32 is configured to measure or otherwise detect the health parameter. This health parameter may be indicative of vibrations in a rotating structure and/or a stationary of the aircraft engine 12; generally referred to as "engine vibrations". The MU sensor 32, for example, may be configured as a vibration sensor; e.g., an accelerometer. Alternatively, the health parameter may be indicative of: a noise level within and/or outside of the aircraft engine 12; a temperature within / of the aircraft engine 12; a pressure within the aircraft engine 12; a rotational speed of one or more components within and/or driven by the aircraft engine 12; or the like. The MU sensor 32, for example, may be configured as a microphone, a temperature sensor, a pressure sensor or a speed sensor. The present disclosure, however, is not limited to the foregoing exemplary health parameters nor to the foregoing exemplary MU sensor types. However, for ease of description, the health parameter may be generally described below as the engine vibrations and the MU sensor 32 may be generally described below as the vibration sensor.

The circuit component 34 is configured to establish (e.g., set) a health parameter threshold for use by the MU controller 36 as described below in further detail. The circuit component 34, for example, may be configured with a predetermined (e.g., constant) internal electrical resistance, which electrical resistance establishes the health parameter threshold. The electrical resistance of the circuit component 34 may be set by providing the circuit component 34 with one or more select electrical resistors. The electrical resistance of the circuit component 34 may also or alternatively be set be providing the circuit component 34 with a certain electrical circuit path length (or path lengths), constructing one or more internal members (e.g., wires, circuit paths, etc.) of the circuit component 34 from material(s) with select electrical resistances, and the like. Of course, various other techniques are known in the art for tailoring an electrical resistance of an electric element, and the present disclosure is not limited to any particular ones thereof.

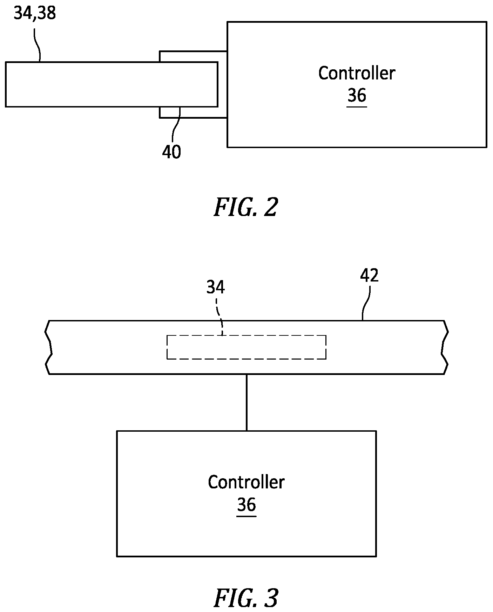

The circuit component 34 is arranged external to the MU controller 36. The circuit component 34 of FIG. 1, for example, is located outside of the MU controller 36 and may be discrete from (e.g., not an integral part of) the MU controller 36. Referring to FIG. 2, the circuit component 34 may be configured as an electronic configuration plug 38; e.g., a resistance trim plug. The circuit component 34 of FIG. 2, in particular, is configured as a device which may plug into a receptacle 40 of the MU controller 36 (or another device in signal communication with the MU controller 36). The circuit component 34 may thereby be operable as a plug-and-play type device. In other words, the circuit component 34 may be relatively easily installed with and removed from the monitoring unit 16 and its MU controller 36 without requiring, for example, removal of the monitoring unit 16 and its MU controller 36 from the aircraft and/or disassembly of the MU controller 36. With this arrangement, the health parameter threshold may be readily changed by swapping out circuit components 34 as described below in further detail. Alternatively, referring to FIG. 3, the circuit component 34 may be integrated into (e.g., embedded with, formed part of, etc.) a wiring harness 42 for the monitoring unit 16. The wiring harness 42 of FIG. 3, for example, may be configured with the select electrical resistance which establishes the health parameter threshold. While not a plug-and-play type device, the wiring harness 42 may also facilitate changing the health parameter threshold by swapping out wiring harnesses 42. The present disclosure, however, is not limited to the foregoing exemplary circuit component configurations.

The MU controller 36 of FIG. 1 is a discrete standalone unit from the engine controller 22. The MU controller 36 may also be remotely located from the engine controller 22. The MU controller 36 is in signal communication with (e.g., hardwired and/or wirelessly coupled to) the MU sensor 32 and the circuit component 34. The MU controller 36 is configured to monitor the health of the aircraft engine 12 by monitoring the health parameter. The MU controller 36, for example, may receive a sensor signal (e.g., continuously or periodically) generated by the MU sensor 32, which sensor signal is indicative of the health parameter. The MU controller 36 may compare the health parameter to the health parameter threshold established by the circuit component 34 to evaluate the health of the aircraft engine 12. For example, where the health parameter is less than the health parameter threshold, the MU controller 36 may determine the aircraft engine 12 is in good health; e.g., operating as expected. However, where the health parameter is equal to or greater than the health parameter threshold, the MU controller 36 may determine the health of the aircraft engine 12 is degrading; e.g., operating abnormally.

The MU controller 36 may also be configured to initiate an action where the health of the aircraft engine 12 is degrading. The MU controller 36 of FIG. 1, for example, is in further signal communication with (e.g., hardwired and/or wirelessly coupled to) an electronic device 44; e.g., a signal manipulator. This electronic device 44 is arranged inline (e.g., along a signal path between) the sensor system 18 and the engine controller 22. The electronic device 44 is configured to alter a predetermined one or more of the sensor signals communicated from the sensor system 18 to the engine controller 22. The electronic device 44, for example, may be configured as or otherwise include a switch, a resistor, a load, an oscillator, or any other electrical element or circuitry which can change (or block) the sensor signal(s) from the sensor system 18 to the engine controller 22. With this arrangement, the MU controller 36 may signal the electronic device 44 to alter the sensor signal(s) to the engine controller 22 in order to trigger a response by the engine controller 22 as described below in further detail.

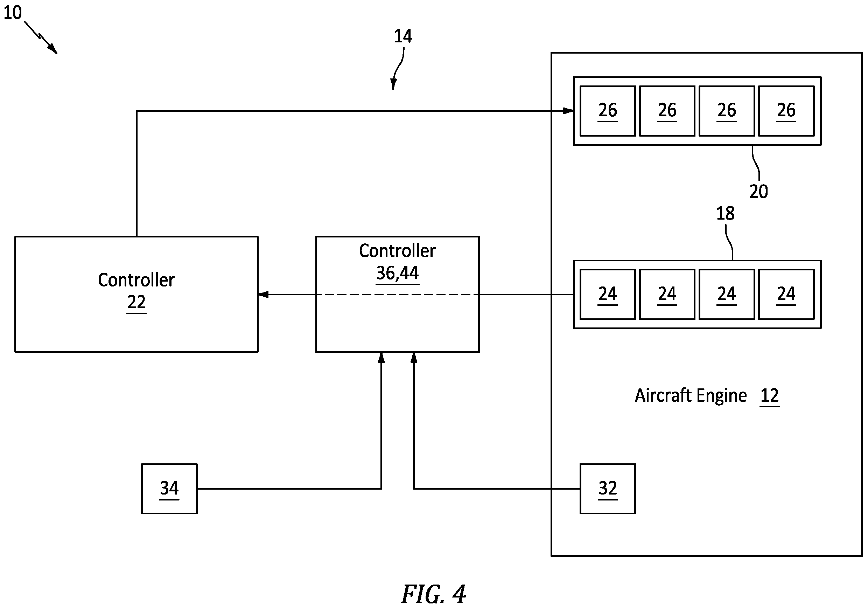

While the MU controller 36 of FIG. 1 alters the sensor signal(s) to the engine controller 22 using the intermediate electronic device 44, the present disclosure is not limited to such an exemplary arrangement. For example, referring to FIG. 4, the electronic device 44 may alternatively be integrated into the MU controller 36. With such an arrangement, the MU controller 36 may be arranged inline the sensor system 18 and the engine controller 22 to directly alter the sensor signal(s) to the engine controller 22 when the health parameter is equal to or greater than the health parameter threshold established by the circuit component 34.

Referring again to FIG. 1, the MU controller 36 may be implemented with a combination of hardware and software. The hardware may include at least one processing unit 46 and a memory 48, which processing unit 46 may include one or more single-core and/or multi-core processors. The hardware may also or alternatively include analog and/or digital circuitry other than that described above. The memory 48 is configured to store software (e.g., program instructions) for execution by the processing device, which software execution may control and/or facilitate performance of one or more operations such as those described in the methods below. The memory 48 may be a non-transitory computer readable medium. For example, the memory 48 may be configured as or include a volatile memory and/or a nonvolatile memory, such as those described above.

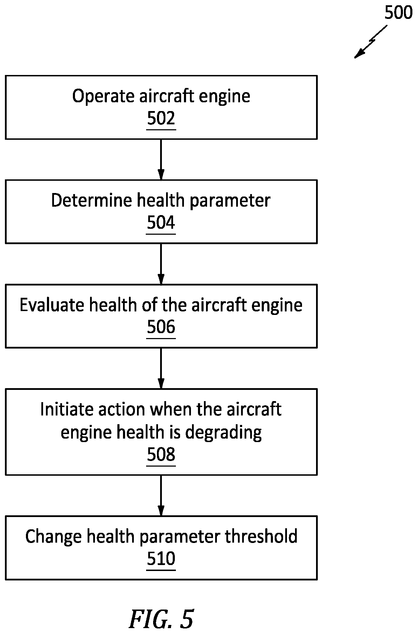

FIG. 5 is a flow diagram of a method 500 of operation for the aircraft engine 12. For ease of description, the operating method 500 is described below with respect to the aircraft system 10 described above. The operating method 500 of the present disclosure, however, is not limited to such exemplary aircraft systems.

In step 502, the aircraft engine 12 is operated for (e.g., during) an aircraft flight. During this aircraft engine operation, the sensor system 18 measures or otherwise detects the operational parameters for the aircraft engine 12 and provides the sensor signal(s) indicative thereof to the engine controller 22. The engine controller 22 processes the sensor signal(s) as well as command(s) from the personnel operating the aircraft to generate the control signal(s) for the actuation system 20 and its actuators 26. The actuation system 20 receives the control signal(s) and affects control of the aircraft engine 12 in response to the control signal(s).

In step 504, the health parameter is determined. The MU sensor 32, for example, measures or otherwise detects the health parameter. The MU sensor 32 then communicates the health parameter (or data indicative thereof) to the MU controller 36 for processing.

In step 506, the health of the aircraft engine 12 is evaluated. The MU controller 36, for example, compares the health parameter to the health parameter threshold which is established by the circuit component 34. Where the health parameter (or data generated therefrom) is less than the health parameter threshold, the MU controller 36 may determine the aircraft engine 12 is in good health. The steps 504 and 506 may then be repeated. However, where the health parameter (or data generated therefrom) is equal to or greater than the health parameter threshold, the MU controller 36 may determine the health of the aircraft engine 12 is degrading and the method may continue on to the next step.

In step 508, an action is initiated where the aircraft engine health is degrading. For example, when the health parameter is equal to or greater than the health parameter threshold, the MU controller 36 may indirectly (see FIG. 1) or directly (see FIG. 4) alter the respective predetermined sensor signal(s) communicated from the sensor system 18 to the engine controller 22. The sensor signal(s) may be altered in such a fashion to trigger a predetermined response by the engine controller 22. The sensor signal(s), for example, may be altered to artificially represent a fault in the measurement of the respective operating parameter(s). The sensor signal(s) may also or alternatively be altered to artificially provide a measurement reading outside an operating band for the respective operating parameter(s). Thus, when the modified sensor signal(s) are processed by the engine controller 22, the engine controller 22 may determine there is a fault in the sensor system 18 and/or may determine a component (or components) of the aircraft engine 12 are no longer operating to specification. The engine controller 22 may then signal a user interface 50 (e.g., a screen, an indicator light, a gauge, a loudspeaker, etc.) to visually and/or audibly present a notification of a fault. This notification may be presented to the personnel operating the aircraft and/or to other personnel remotely monitoring (e.g., in real time) the aircraft flight. In addition or alternatively, the notification may be stored in the memory (e.g., 30) for later retrieval by maintenance personnel.

Upon processing of the altered sensor signal(s), the engine controller 22 may also or alternatively modify (e.g., change, alter, derate, etc.) the operation of the aircraft engine 12. The engine controller 22, for example, may lower a maximum power output for the aircraft engine 12 (e.g., during nominal operation, outside of emergency conditions), may turn off the aircraft engine 12 (e.g., when not needed for critical flight operation), or otherwise.

In step 510, the health parameter threshold may be changed. For example, following the aircraft flight, maintenance personal may determine the cause for the elevated health parameter is not critical. The aircraft engine 12 therefore may still be safely used before aircraft engine maintenance, overhaul and/or replacement is performed. In such a circumstance, the maintenance personnel may replace the currently installed circuit component 34 with another (replacement) circuit component 34. This replacement circuit component 34 may be configured with an electrical resistance which establishes a threshold that is different (higher) than the health parameter threshold established by the electrical resistance of the circuit component 34 being replaced. This swapping of the circuit components 34 may thereby change (e.g., increase) the health parameter threshold. However, the monitoring unit 16 is still functional and may still initiate an action as described above if the aircraft engine health were to continue to degrade. In other words, the swapping of the circuit components 34 may change a sensitivity of the monitoring unit 16, rather than override or prevent operation of the monitoring unit 16.

While the health parameter threshold is described above as being changed following a triggering of the monitoring unit 16 (e.g., identification of a fault), the present disclosure is not limited thereto. For example, the health parameter threshold may also or alternatively be changed between aircraft flights based on pilot preference, predicted mission conditions (e.g., if severe turbulence is expected), carrier standards, expected remaining service life of the aircraft engine 12, etc. Moreover, while the health parameter threshold is described above as being increased, it is also contemplated the health parameter threshold may be decreased in select situations. For example, the health parameter threshold may be lowered to a value which is expected to be exceeded during normal aircraft engine operation. The monitoring unit 16 may thereby be tested to ensure proper operation during maintenance and/or certification processes.

In some embodiments, the MU controller 36 may be locked out or otherwise disabled from sending a fault signal to the engine controller 22 independent of the measurement of the MU sensor 32. For example, the circuit component 34 may be replaced by another circuit component with such a high resistance that its threshold would not be exceeded in an (e.g., practical) situation. The MU controller 36 may also or alternatively be configured such that removal of the circuit component 34 (e.g., where no circuit component is coupled to the MU controller 36) prevents signaling of the fault to the engine controller 22. With such a capability, an operator may readily disable the monitoring unit 16 (e.g., with minimal effort), for example, after maintenance has been scheduled for a previously identified fault.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of operation, comprising:
determining a parameter of an aircraft engine (12) of an aircraft;
comparing the parameter to a threshold using a monitoring unit controller (36) onboard the aircraft, the threshold established by an electrical resistance of a circuit component (34) onboard the aircraft which is external to the monitoring unit controller (36); and
initiating an action using the monitoring unit controller (36) where the parameter is greater than or equal to the threshold.

2. The method of claim 1, wherein the circuit component (34) is discrete from the monitoring unit controller (36).

3. The method of claim 1 or 2, wherein the circuit component (34) comprises an electronic configuration plug (38) electrically coupled to the monitoring unit controller (36).

4. The method of claim 1 or 2, wherein the circuit component (34) comprises a wire harness (42) electrically coupled to the monitoring unit controller (36).

5. The method of any preceding claim, wherein the circuit component (34) is a first circuit component (34), the method further comprising:
changing the threshold by replacing the first circuit component (34) with a second circuit component (34);
wherein an electrical resistance of the second circuit component (34) is different than the electrical resistance of the first circuit component (34).

6. The method of claim 5, wherein the changing of the threshold comprises increasing the threshold.

7. The method of claim 5, wherein the changing of the threshold comprises decreasing the threshold.

8. The method of claim 5, 6 or 7, wherein
the action is initiated during an aircraft flight; and
the threshold is changed following the aircraft flight during maintenance of the aircraft.

9. The method of any of claims 5 to 8, wherein the first circuit component (34) is replaced with the second circuit component (34) without disassembling the monitoring unit controller (36) and/or without removing the monitoring unit controller (36) from the aircraft.

10. The method of any preceding claim, wherein the parameter comprises vibrations.

11. The method of any preceding claim, wherein the action comprises a notification to at least one of an operator of the aircraft engine (12) or maintenance personnel.

12. The method of any preceding claim, further comprising:
measuring a second parameter of the aircraft engine (12) using a sensor (24); and
communicating a signal from the sensor (24) to an engine controller (22) for the aircraft engine (12), the signal indicative of the second parameter;
the action comprising altering the signal between the sensor (24) and the engine controller (22) using the monitoring unit controller (36) to trigger a response by the engine controller (22).

13. The method of claim 12, wherein the response comprises initiating a notification to at least one of an operator of the aircraft engine (12) or maintenance personnel, and/or the response comprises altering operation of the aircraft engine (12).

14. The method of any preceding claim, further comprising:
providing a monitoring unit for the aircraft engine, the monitoring unit onboard the aircraft, the monitoring unit including a monitoring unit sensor (32), the circuit component (34) and the monitoring unit controller (36), the monitoring unit controller (36) in signal communication with the monitoring unit sensor (32) and the circuit component (34), wherein the monitoring unit sensor (32) determines the parameter of the aircraft engine (12); and
changing the threshold between flights of the aircraft.

15. An aircraft system (10), comprising:
an aircraft engine (12); and
a monitoring unit (16) including a sensor (32), a circuit component (34) and a controller (36), the circuit component (34) external to the controller (36), the controller (36) in signal communication with the sensor (32) and the circuit component (34), and the monitoring unit (16) configured to
measure a parameter of the aircraft engine (12) using the sensor (32);
establish a threshold using an electrical resistance of the circuit component (34); compare the parameter to the threshold using the controller (36); and
initiate an action where the parameter is greater than or equal to the threshold.
